# EUROPEAN PATENT APPLICATION

(11) **EP 3 832 996 A1**
(43) Date of publication of application: **09.06.2021**
(21) Application number: 19306593.5
(22) Date of filing: 06.12.2019
(51) Int. Cl.: H04M 15/00, H04W 4/24, H04M 17/00

(54) **METHOD TO DYNAMICALLY SELECT A MOBILE OPERATOR SUBSCRIPTION BASED ON THE TERMINAL LOCATION, ON THE RECEIVED SIGNAL STRENGTHS AND ON BUSINESS AGREEMENTS, CORRESPONDING SECURE ELEMENT AND HOME SUBSCRIBER SERVER**

(71) Applicant: THALES DIS FRANCE SA, 92190 Meudon (FR)
(72) Inventor: LAMBERTON, Marc, 13881 GEMENOS CEDEX (FR); SCHWARTZ, Arnaud, 13881 GEMENOS CEDEX (FR); MORANDI, Sylvain, 13881 GEMENOS CEDEX (FR); SCHAETZEL, Maria, 13881 GEMENOS CEDEX (FR)
(74) Representative: Scheer, Luc

(57) **Abstract**

The present invention concerns a method for dynamically selecting a mobile subscription for a secure element cooperating with a terminal 10 in a telecommunication system comprising a network 11 visited by the terminal and a HSS 12 of a server, the method comprising:
- sending 100 from the secure element a random e-IMSI ephemeral IMSI in a first attachment request message to the HSS 12 through the visited network 11, the visited network 11 having the best received signal and having a roaming agreement with an e-IMSI service provider;
- Transmitting 101 from the HSS 12 to the secure element in a signaling message a PLMN list of all the local operators having a commercial agreement with the e-IMSI service provider;
- Transmitting 102 from the secure element to the HSS 12 through the visited network 11 in an authentication failure message an identity of the secure element;
- Determine at the level of the HSS 12 if the service provider has a commercial agreement with the operator of the visited network 11 and, if yes, reserving by the HSS 12 a subscription from the operator and sending 103 the corresponding IMSI to the secure element through an answer.

## Description

The present invention concerns telecommunications and more precisely roaming in 5G networks. It is known that a terminal (a mobile terminal like a smartphone, a PDA or a computer for example or a M2M equipment) cooperating with a secure element (a SIM card, a UICC, an eUICC (embedded UICC) or an iUICC (integrated UICC) for example) can roam in different countries. The secure element can also be in the form of an embedded software comprised in the terminal. The terminal is normally attached to his home network but when it enters in another country, roaming agreements are in place between the home network operator and operators of the visited country. This permits to the terminal to handle calls, e-mails, SMS,... in the visited country.

It is also known to use a secure element having stored therein a plurality of IMSIs (International Mobile Subscription Identifiers). A multi IMSI solution enables a MNO having limited roaming agreements to leverage other MNOs roaming agreements (so called "service sponsors MNOs"). When the terminal/user is roaming, a multi-IMS applet in the SIM changes the IMSI to the service sponsor's MNO IMSI.

Details can be found here: https://www.gemalto.com/brochures-site/download-site/Documents/linqUs InstantRoamingMultilMSI.pdf

An IMSI is constituted by a code MCC/MNC/MSIN, where MCC is a Mobile Country Code, MNC is a Mobile Network Code and MSIN is the Mobile Subscriber Identification Number of the subscriber of the MNO.

The invention concerns any consumer and M2M terminal with a cellular access: 2G, 3G, 4G/LTE, NB-IoT (Narrowband loT or LTE-M), and 5G radio network for any relevant telecom service. It concerns terminals using a secure element like a SIM card, a UICC, an eUICC (embedded UICC), an iUICC (integrated UICC) or a softSim.

Some classes of terminals, especially M2M terminals, are deployed in locations where the mobile networks coverage is not guaranteed for all the local MNOs of the country. This typically applies for terminals which do not move and for utility metering terminals (electricity, water, gas) which are often installed in underground locations.

Since the cellular coverage is variable according to the different local mobile operators, and before testing the terminal, it is impossible to determine what will be the best operator for that location.

Today, for installing each terminal it requires to send a technician who tests the terminal with all SIM cards from the local operators. This is a lengthy and costly process.

Another solution is to use a multi-IMSI UICC with an applet which selects one of the pre-loaded IMSI as explained above. This solution is also more costly since it requires several subscriptions per UICC.

There is therefore a need for a solution capable to determine automatically what the best operator is, at the time the terminal is installed in its final location and to dynamically create a subscription for that terminal.

To this end, the invention proposes a method for dynamically selecting a mobile subscription for a secure element cooperating with a terminal in a telecommunication system comprising a network visited by the terminal and a HSS of a server, the method comprising:
a- sending from the secure element a random e-IMSI (ephemeral IMSI) in a first attachment request message to the HSS through the visited network, the visited network having the best received signal and having a roaming agreement with an e-IMSI service provider;
b- Transmitting from the HSS to the secure element in a signaling message a PLMN list of all the local operators having a commercial agreement with the e-IMSI service provider;
c- Transmitting from the secure element to the HSS through the visited network in an authentication failure message the identity of the secure element;
d- Determine at the level of the HSS if the service provider has a commercial agreement with the operator of the visited network and, if yes, reserving by the HSS a subscription from the operator and sending the corresponding IMSI to the secure element through an answer.

Preferably, if the test of step -d- is negative, the method further comprises:
e - Selecting by the modem in the PLMN list provided at step -d- the local network of a MNO having the best signal and commercial agreement;
f- Sending by the secure element through the network of this local network MNO a second e-IMSI in a signaling attachment request message to the HSS;
g- After having retrieved the network information of the local MNO, reserving by the HSS a subscription from the local MNO and sending the corresponding IMSI to the secure element through an answer.

Preferably, the secure element is a UICC.

Alternatively, the secure element is an eUICC or an iUICC or a soft SIM and where step -d- or - g- is used for a bootstrap temporary connectivity in order to load an operational profile from the selected MNO using GSMA RSP.

The invention also concerns a computer program having instructions for implementing the aforementioned method, and a HSS of a server comprising a computer program having instructions for implementing this method.

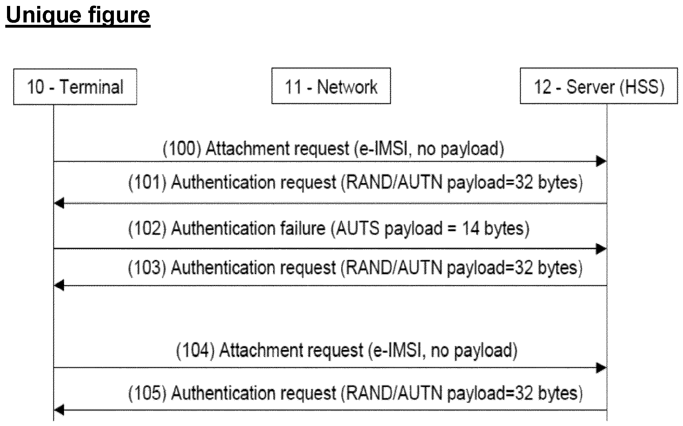

The present invention will be better understood by reading the following description of a preferred embodiment of the invention, in regard of the figure that represent exchanges of signals between a secure element comprised in a terminal and a HSS (Home Subscriber Server).

The present invention is an improvement that enters in the scope of the following patent applications:
- WO/2018141895
- WO/2018141896
- PCT/EP/2019072049

In these patent applications, mechanisms are described that allow to configure remotely secure elements by using only signaling messages.

More precisely, WO/2018141895 proposes for example a method for establishing a bidirectional communication channel between a server and a secure element cooperating with a terminal in a cellular telecommunication network for exchanging data and commands, the method comprising:
a- Sending a first attachment request signaling message from the terminal to the server, the first message comprising a MCC and a MNC of the server, and at least a part of a unique identifier of the secure element, the server being provisioned with the unique identifier;
b- Sending from the server to the secure element, in at least a first signaling message:
   ∘ At least a command;
   ∘ A correlation identifier if further messages have to be sent from the secure element to the server;
   ∘ A first payload comprising data;
c- Executing at the secure element the command.

The present invention is based on such a mechanism.

In the following description, we call "secure element" a credential container whatever the technology which is used: UICC, eUICC, iUICC or softSim. The secure element cooperates with a terminal (mobile or not). We call "service provider" an entity which manages the fleet of terminals (for example, a utility company using meters). We call "commercial agreements" between that service provider and several local MNOs, agreements to purchase bulks of subscriptions which will be used for the fleet of terminals.

Since the service provider may not have commercial agreements with all the local MNOs, the goal of the invention is to find among the local MNOs having a commercial agreement with the service provider, the best one with enough signal for the location where a terminal is installed.

This is illustrated by the unique figure when using a UICC. Another solution will be described later when using an eUICC or an iUICC or a softSIM.

The figure represents three entities: A terminal 10, like a M2M equipment for example, a visited network 11 and a HSS server 12.

The algorithm of the invention uses several steps requiring either one or two different dialogues. The first dialogue corresponds to steps 100 to 103 and the second dialogue corresponds to steps 104 and 105.

In the first dialogue, at step 100, the secure element of the terminal is a UICC, takes a random e-IMSI (ephemeral IMSI) as described in the previous mentioned patent applications (an e-IMSI belonging to a range of e-IMSIs allocated to a service provider) and tries a first attachment request with the network 11. We assume that the e-IMSI belongs to a single global network operator 11 which has roaming agreements with all the local operators in the country where the terminal is deployed. The modem of the terminal 10 scans all the available radio bands before selecting the local network 11 that has the best signal (in terms of power) and tries to attach to it. If this visited network 11 has no roaming agreement with the e-IMSI provider, the modem tries another local operator with the second better signal, etc...

The visited network 11 that has a roaming agreement with the e-IMSI provider transmits the attachment request to the HSS server 12 as described in the previous mentioned patent applications. When receiving the attachment request message, the server 12 retrieves the visited network 11 information (either from the 4G signaling MCC/MNC (IMSI information) or from the 3G signaling E.164 CC/NDC (MSISDN information)). The server 12 uses this latter information to create a PLMN list of all the local operators having a commercial agreement with the service provider having this e-IMSI.

To be more precise, a list containing all known commercial agreements for many operators is loaded in the server 12. The HSS server 12 prepares a part of this list (concerning local operators only having agreements with the e-IMSI service provider) to be sent to the secure element) and sends in a signaling message a PLMN list of all the local operators having a commercial agreement with the e-IMSI service provider.

This information is injected in the secure element at step 101 in an RAND/AUTN payload message of 32 bytes.

At step 102, the secure element provides its identity (ICCID, or EID in case of eUICC, or IMEI in case of iUICC or soft Sim) to the HSS 12 through the visited network 11 in an authentication failure message (in an AUTS message having a payload of 14 bytes). At this point, the server 12 applies business rules to determine if the service provider has a commercial agreement with this local operator (current visited network 11).

The HSS 12 determines if the service provider has a commercial agreement with the operator of the visited network 11 and, if yes, reserves a subscription from the operator and sends (at step 103 the corresponding IMSI to the secure element through an answer.

So, if yes, the server 12 reserves a subscription from this operator and injects the corresponding IMSI into the UICC through an answer at step 103 (RAND/AUTN payload of 32 bytes as previously). The network selection process is then completed and the UICC forces a REFRESH and a re-attachment with the selected IMSI. The UICC is then connected to the network of this operator.

If no, the UICC goes to step 104 to relaunch a new dialogue (steps 104 and 105 are optional since they are only launched if the visited network has no commercial agreement with the service provider).

At this step 104, the UICC selects in the PLMN list provided at step 101 (this ordered list containing all the local operators having a commercial agreement with the service provider) the local network having enough signal and belonging to the PLMN list. This is done thanks to the modem of the terminal 10 that is scanning all the available radio bands.

The UICC sends at step 104 through the network of this selected local MNO having a commercial agreement with the service provider a second e-IMSI in a signaling attachment request message to the server 12.

At step 105, the server 12 that has received the attachment request (step 104) retrieves the visited network information (as before either from the 3G signaling MCC/MNC or from the 4G signaling E.164 CC/NDC). It reserves a subscription from this operator and injects the corresponding IMSI into the UICC in an answer (step 105 - RAND/AUTN payload). The network selection process is completed and the UICC forces a REFRESH and a re-attachment with the selected IMSI. The UICC is now connected to the best received network having a commercial agreement with the service provider.

Thus the main ideas are:
- To use the solution described in the aforementioned patent applications and to use the ephemeral IMSI (e-IMSI) signaling flow as a probe to sense the available local networks
   to leverage on the modem which naturally selects the local network with the best signal.
- In a 2^{nd} optional stage to use the PLMN list to force the modem to use only the local MNOs who have enough signal and a commercial agreement with the service provider (the PLMN is used to convey an ordered list of MNOs having a commercial agreement with the service provider; this is slightly different from a PLMN containing a list of MNOs for their roaming agreements with a home network).

Once the best network has been selected, the solution invokes an API of the selected MNO's BSS to activate a subscription for that terminal (based on an ICCID or an IMSI).

If the terminal 10 contains an eUICC, an iUICC or a soft SIM, a similar sequence can be used. In that case the injected IMSI (of steps 103 or 105) is used for a bootstrap temporary connectivity in order to load an operational profile from the selected MNO using GSMA RSP (Remote Sim Provisioning).

The invention also comprises a secure element comprising a computer program having instructions for implementing the method described above, and a corresponding HSS.

The solution described above doesn't require any 3GPP/GSMA standard modifications, and relies on the flows described in the previously mentioned patent applications as a probe to explore the available local networks. This information being available to the HSS before any subscription is created, it allows the server to dynamically select the best operator and to reserve a subscription from this operator.

The invention essentially applies to consumer loT devices (for example metering devices) or payment terminals using cellular connections.

## Claims

1. A method for dynamically selecting a mobile subscription for a secure element cooperating with a terminal (10) in a telecommunication system comprising a network (11) visited by said terminal and a HSS (12) of a server, said method comprising:
a- sending (100) from said secure element a random e-IMSI (ephemeral IMSI) in a first attachment request message to said HSS (12) through the visited network (11), said visited network (11) having the best received signal and having a roaming agreement with an e-IMSI service provider;
b- Transmitting (101) from said HSS (12) to said secure element in a signaling message a PLMN list of all the local operators having a commercial agreement with said e-IMSI service provider;
c- Transmitting (102) from said secure element to said HSS (12) through said visited network (11) in an authentication failure message an identity of said secure element;
d- Determine at the level of said HSS (12) if said service provider has a commercial agreement with the operator of said visited network (11) and, if yes, reserving by said HSS (12) a subscription from said operator and sending (103) the corresponding IMSI to said secure element through an answer.

2. A method according to claim 1 wherein if the test of step -d- is negative, said method further comprises:
- e- Selecting by the modem of said terminal in the PLMN list provided at step -d- the preferred local network of a MNO (11) having enough signal strength;
- f- Sending (104) by said secure element through the network of this local network MNO (11) a second e-IMSI in a signaling attachment request message to said HSS (12);
- g- After having retrieved the network information of said local MNO (11), reserving by said HSS (12) a subscription from said local MNO (11) and sending (105) the corresponding IMSI to said secure element through an answer.

3. A method according to claims 1 or 2, wherein said secure element is a UICC.

4. A method according to claims 1 or 2, wherein said secure element is an eUICC or an iUICC or a soft SIM and where step -d- or-g- is used for a bootstrap temporary connectivity in order to load an operational profile from the selected MNO using GSMA RSP.

5. A secure element comprising a computer program having instructions for implementing the method according to any of the claims 1 to 4.

6. A HSS of a server comprising a computer program having instructions for implementing the method according to any of the claims 1 to 4.
